# EUROPÄISCHE PATENTANMELDUNG

(11) **EP 1 650 542 A1**
(43) Veröffentlichungstag der Anmeldung: **26.04.2006**
(21) Anmeldenummer: 04025143.1
(22) Anmeldetag: 22.10.2004
(51) Int. Cl.: G01M 17/02, G01M 1/04, G01M 1/22

(54) **Reifenprüfmaschine**

(71) Anmelder: Collmann GmbH & Co. Spezialmaschinenbau KG, 23558 Lübeck (DE)
(72) Erfinder: Kaczorowski, Richard, Dipl.-Ing., 22145 Braak (DE); Hilgemann, Detlev, Dipl.-Ing., 52074 Aachen (DE)
(74) Vertreter: Hemmer, Arnd

(57) **Zusammenfassung**

Eine Reifenprüfmaschine mit zwei Testfelgenhälften (16, 18) zum Einspannen eines Fahrzeugreifens (4), bei welcher die erste Testfelgenhälfte (16) an einem inneren Halteelement (12) und die zweite Testfelgenhälfte (18) an einem äußeren Halteelement (14) angebracht sind, das innere Halteelement (12) in das Innere des äußeren Halteelements (14) einsetzbar ist und zumindest ein gezahntes Verriegelungselement (58) vorgesehen ist, welches an dem inneren Halteelement (12) radial nach außen bewegbar und mit dem äußeren Halteelement (14) in Eingriff bringbar angeordnet ist (Fig. 2).

## Beschreibung

Die Erfindung betrifft eine Reifenprüfmaschine mit den im Oberbegriff des Anspruchs 1 angegebenen Merkmalen.

Reifenprüfmaschinen, wie sie beispielsweise zur Messung von Geometriefehlern und Unwuchten von Fahrzeugreifen eingesetzt werden, weisen im Allgemeinen zwei Testfelgenhälften auf, zwischen denen ein Reifen eingespannt und anschließend zur Reifenprüfung in Rotation versetzt wird. Der zwischen den Testfelgenhälften eingespannte Reifen wird mit Druckluft beaufschlagt, um einen den Betriebsbedingungen entsprechenden Reifeninnendruck aufzubauen. Der Reifeninnendruck erzeugt eine Kraft, welche die Testfelgenhälften auseinanderdrückt. Daher ist eine sichere Verriegelung der Testfelgenhälften bei eingespannten Reifen erforderlich.

Eine Art der Verriegelung ist in der WO 03/071250 A1 beschrieben. Hier sind die Testfelgenhälften jeweils an einem Verriegelungsteil einer zweiteiligen Verriegelungsvorrichtung angeordnet. Die Verriegelungsteile greifen beim Einspannen eines Fahrzeugreifens nach Art eines Bajonettverschlusses ineinander, wodurch die Testfelgenhälften in Richtung der Drehachse verriegelt werden.

In den EP 0 924 502 A2, EP 1 143 233 A1 sowie EP 1 239 275 A2 sind Verriegelungssysteme vorgesehen, in denen ein inneres Verriegelungsteil einen profilierten Verriegelungsabschnitt, der sich über seinen gesamten Umfang erstreckt aufweist. An einem äußeren Verriegelungsteil sind korrespondierend profilierte Verriegelungselemente vorgesehen, welche jeweils von außerhalb des Verriegelungsteils über eine Stellschraube in eine verriegelnde oder entriegelnde Stellung verbracht werden können. Entsprechend zeitaufwendig ist bei diesen Verriegelungssystemen der Ver- bzw. Entriegelungsvorgang. Ferner nehmen diese Verriegelungselemente viel Raum in Anspruch und erhöhen Masse, Trägheit und mögliche Unwuchten der zu rotierenden Teile erheblich, was sich nachteilig auf die Messgenauigkeit auswirkt. Auch ist es schwer, ein unbeabsichtigtes Öffnen der Verriegelung sicher zu verhindern.

Vor diesem Hintergrund liegt der vorliegenden Erfindung die Aufgabe zugrunde, eine Reifenprüfmaschine zu schaffen, in der Fahrzeugreifen sicherer eingespannt und mit der erforderlichen Genauigkeit geprüft werden können.

Diese Aufgabe wird durch eine Reifenprüfmaschine mit den in Anspruch 1 angegebenen Merkmalen gelöst. Vorteilhafte Weiterbildungen der Erfindung ergeben sich aus den Unteransprüchen, der nachfolgenden Beschreibung und den Zeichnungen.

Die erfindungsgemäße Reifenprüfmaschine weist zwei Testfelgenhälften zum Einspannen eines Fahrzeugreifens auf, wobei die erste Testfelgenhälfte an einem inneren Halteelement und die zweite Testfelgenhälfte an einem äußeren Halteelement angebracht sind. Das innere Halteelement ist in das Innere des äußeren Halteelements einsetzbar. Es ist zumindest ein gezahntes Verriegelungselement vorgesehen, welches an dem inneren Halteelement radial nach außen bewegbar und mit dem äußeren Halteelement in Eingriff bringbar angeordnet ist.

Bevorzugt ist das äußere Halteelement zumindest an seinem dem inneren Halteelement zugewandten Ende hohl ausgebildet. In der Reifenprüfmaschine ist so in einer geöffneten Stellung eine offene Stirnfläche des äußeren Halteelements einer Stirnfläche des inneren Halteelements zugewandt. Das äußere und das innere Halteelement weisen, zumindest in dem Bereich, in dem sie ineinander greifen, vorzugsweise einen korrespondierenden Querschnitt auf. Besonders bevorzugt ist das innere Halteelement zylindrisch und das äußere Halteelement hohlzylindrisch ausgebildet. Das äußere Halteelement ist konzentrisch zu dem inneren Halteelement angeordnet, d.h., die beiden Halteelemente weisen eine gemeinsame Längs- bzw. Mittelachse auf. Diese Längs- bzw. Mittelachse ist mit der Rotationsachse der Reifenprüfmaschine, d.h. mit der Achse, um die die Fahrzeugreifen während der Reifenprüfung gedreht werden, identisch. In Richtung der Mittelachse kann zumindest eines der Halteelemente zum Einspannen eines Fahrzeugreifens in Richtung des anderen Halteelements bewegt werden, so dass das innere Halteelement in das äußere Halteelement eingreift. Hierzu sind die Halteelemente vorzugsweise so dimensioniert, dass die Innenwandung des äu-ßeren Halteelements die Außenwandung des inneren Halteelements mit möglichst geringem Spiel übergreift.

Das Verriegelungselement ist an dem inneren Halteelement derart angeordnet, dass es von einer das innere und das äußere Halteelement nicht verriegelnden Stellung, in der das Verriegelungselement bevorzugt im Wesentlichen oder vollständig innerhalb der Querschnittskontur des inneren Halteelements angeordnet ist, radial zur Mittel-bzw. Rotationsachse nach außen in eine Position bewegt werden kann, in der es mit dem äußeren Halteelement vorzugsweise an dessen Innenwandung in Eingriff kommt. Unter der Radialbewegung in diesem Sinne ist eine Bewegung zu verstehen, die zumindest eine Richtungskomponente radial zur Rotationsachse beinhaltet, wobei eine reine Radialbewegung des Verriegelungselements bevorzugt ist. Dazu ist zweckmäßigerweise an dem inneren Halteelement eine entsprechende Führung des Verriegelungselementes in radialer Richtung relativ zur Rotationsachse der Testfelgehälften vorgesehen. Diese kann beispielsweise in Form von Durchbrechungen in einer Umfangswandung des inneren Halteelementes realisiert sein, welche sich in der gewünschten radialen Richtung erstreckt. Das Verriegelungselement kann passend an den Seitenflächen der Durchbrechung geführt werden. Ist das Verriegelungselement in seiner radial äußeren Position mit dem äußeren Halteelement in Eingriff, blockiert das Verriegelungselement ein Auseinanderbewegen der beiden Halteelemente in Richtung der Rotationsachse. Zum Bewegen des Verriegelungselements in diese Verriegelungsposition und zum Halten des Verriegelungselements in der Verriegelungsposition ist eine Kraft erforderlich, welche entsprechend der Bewegungsrichtung des Verriegelungselements während des Verriegelns radial von innen nach außen, d.h. von dem inneren Halteelement zu dem äußeren Halteelement, gerichtet ist. Diese Kraft weist die gleiche Wirkungsrichtung wie die Fliehkraft auf, die während der Reifenprüfung aufgrund der Rotation auf das Verriegelungselement wirkt. So wird die Verriegelungskraft bei der erfindungsgemäßen Anordnung durch diese Fliehkraft vorteilhaft unterstützt.

Des Weiteren ist es bei der erfindungsgemäßen Reifenprüfmaschine von Vorteil, dass das Verriegelungssystem im Wesentlichen vollständig innerhalb eines durch das äußere Halteelement begrenzten Raums nahe der Rotationsachse, beispielsweise innerhalb eines Hohlzylinders des äußeren Halteelements angeordnet ist und so am Außenumfang des äußeren Halteelements keine Verriegelungsbauteile aufbauen. Da alle beweglichen Bauteile der Verriegelung im Wesentlichen im Inneren des inneren Halteelements angeordnet werden können, sind sie dort vor funktionsbeeinträchtigenden Verunreinigungen, beispielsweise durch Staub in der Umgebung der Reifenprüfmaschine, geschützt.

An der dem äußeren Halteelement zugewandten Seite weist das Verriegelungselement ein verzahntes Profil auf, welches sich bezüglich der Rotationsachse in Umfangsrichtung erstreckt. Durch diese Gestaltung werden mehrere Kontaktflächen mit dem äußeren Halteelement geschaffen, auf die die zwischen den Halteelementen in Richtung der Rotationsachse wirkende Kraft verteilt wird. Entsprechend wird die Flächenpressung verringert. Die Anzahl der Zähne sowie deren Ausgestaltung können dem Anforderungsprofil der Reifenprüfmaschine bzw. den zu erwartenden Belastungen angepasst werden. So stellt die efindungsgemäße Reifenprüfmaschine sicher, dass ein Fahrzeugreifen zwischen den an den beiden Halteelementen angeordneten Testfelgenhälften zuverlässig eingespannt werden kann.

Zweckmäßigerweise weist das äußere Halteelement zumindest einen mit dem Verriegelungselement korrespondierenden Eingriffsabschnitt mit einer Verzahnung auf. Dieser Eingriffsabschnitt kann beispielsweise durch das Einarbeiten eines zur Verzahnung des Verriegelungselements komplementären Profils in die dem inneren Halteelement zugewandte Innenwandung des äußeren Halteelements.gebildet sein, oder die Innenwandung des äußeren Halteelements weist eine Ausnehmung auf, in der ein entsprechender Eingriffsabschnitt als separates Bauteil eingesetzt ist. Im verriegelten Zustand greift vorzugsweise jeweils ein Zahn des Verriegelungselements in eine Zahnlücke des Eingriffsabschnitts und umgekehrt ein. Bevorzugt weist der verzahnte Eingriffsabschnitt in Richtung der Mittelachse des äußeren Halteelements eine größere Höhe als die Verzahnung des Verriegelungselements auf, d.h., die Zähnezahl des Verriegelungsabschnitts ist größer als die des Verriegelungselements. Diese Ausbildung ermöglicht es, dass das innere und das äußere Halteelement auch dann sicher miteinander verriegelt werden können, wenn in der Reifenprüfmaschine Fahrzeugreifen mit unterschiedlichen Laufflächenbreiten eingespannt werden, d.h., die Testfelgenhälften können in verschiedenen Abständen in Richtung der Mittelachse der Halteelemente verriegelt werden.

Das Verriegelungselement weist bevorzugt ein Zahnprofil mit zumindest einer geneigten Flanke auf. Die Flankenneigung relativ zur Radialrichtung, erleichtert das Eingreifen des Zahns in eine Zahnlücke des Eingriffsabschnitts des äußeren Halteelements auch in dem Fall, in dem der Zahn und die Zahnlücke nicht ganz exakt zueinander fluchtend ausgerichtet sind. Wenn das Verriegelungselement in einen korrespondierend profilierten Eingriffsabschnitt des äußeren Halteelements eingreift, ermöglicht die Neigung der Flanke ferner eine Selbstausrichtung des Verriegelungselements zu dem Eingriffsabschnitt und damit auch der beiden Halteelemente zueinander. Bevorzugt sollte die Flankenneigung so gewählt sein, dass die Reibungskräfte zwischen dem Verriegelungselement und dem Eingriffsabschnitt eine Bewegung des Verriegelungselements aus seiner Verriegelungsposition verhindern und der Eingriff des Verriegelungselements in den Eingriffsabschnitt als selbsthemmend angesehen werden kann.

Vorteilhaft ist zumindest eine Flanke des Verriegelungselements, welche der Testfelgenhälfte des inneren Halteelements zugewandt ist, normal zur Mittelachse der Halteelemente und Testfelgenhälften, d. h. zur Rotationsachse, ausgerichtet. Diese Flanke bildet mit einer korrespondierenden Flanke des Eingriffsabschnitts des äußeren Halteelements einen Kontaktbereich, welcher die Kräfte, die durch den Reifeninnendruck hervorgerufen werden und auf die Testfelgenhälften wirken, aufnimmt. Da die Kräfte in Richtung der Mittelachse der Halteelemente und Testfelgenhälften wirken, sind sie dementsprechend normal zu dieser Flanke des Verriegelungselements ausgerichtet. So weisen die Kräfte keine Kraftkomponente auf, die auf das Verriegelungselement radial in Richtung der Mittelachse des inneren Halteelements wirkt und ein Lösen der Verriegelung bewirken könnte. Besonders günstig ist es, wenn die der Testfelgenhälfte des inneren Halteelements zugewandten Flanken mehrerer oder alle Zähne des Verriegelungselements eine Ausrichtung normal zur Mittelachse der Halteelemente und Testfelgenhälften aufweisen, so dass die zu übertragenden Kräfte auf eine größere Fläche verteilt werden. Diese Flanken können dann zusammen mit daran angrenzenden geneigten Flanken ein Sägezahnprofil bilden, welches sowohl eine sichere Kraftübertragung als auch die oben beschriebene Selbsthemmung ermöglicht.

Vorteilhaft ist das Verriegelungselement als Kreisringsegment ausgebildet. Insbesondere ist die im verriegelten Zustand mit dem äußeren Halteelement bzw. dessen Eingriffsabschnitt in Eingriff befindliche Seite des Verriegelungselements der Form des Innendurchmessers des äußeren Halteelements angepasst. Durch diese Ausgestaltung können die Verriegelungselemente in Umfangsrichtung breiter ausgebildet werden. Damit einhergehend werden die während des Verriegelns belasteten Flächen des Verriegelungselements vergrößert, so dass die Belastung in günstiger Weise auf einen größeren Flächenbereich verteilt wird. Des Weiteren wird mit zunehmender Umfangslänge des kreisringförmig ausgebildeten Verriegelungselements der Angriffspunkt einer Gesamtbelastung, welche aus den an dem verzahnten Profil angreifenden Kräften resultiert, an dem Verriegelungselement radial in Richtung der Mittelachse des inneren Halteelements verschoben. Hierdurch werden die Momentenwirkung der auf das Verriegelungselement wirkenden Belastung verringert, was ein daraus resultierendes Kippen des Verriegelungselements und eine sich daraus ergebende Kantenpressung verhindert.

In einer bevorzugten Ausbildung der erfindungsgemäßen Reifenprüfmaschine sind mehrere Verriegelungselemente vorgesehen. Diese sind vorzugsweise gleichmäßig über den Umfang des inneren Halteelements verteilt angeordnet und erstrecken sich gemeinsam vorzugsweise im Wesentlichen um den gesamten Umfang des inneren Halteelements. Diese Anordnung unterstützt die Zentrierung des inneren Halteelements gegenüber dem äußeren Halteelement. Die gleichmäßige Massenverteilung der Verriegelungselemente um den gesamten Umfang des inneren Halteelements verhindert ferner, dass die Verriegelungselemente eine Unwucht erzeugen. Des Weiteren ermöglicht diese Ausgestaltung eine gleichmäßig verteilte Belastung über den gesamten Umfang des inneren und des äußeren Halteelements. Ferner werden die einzelnen Verriegelungselemente weniger stark belastet. So dass diese Ausbildung eine maßgebliche Voraussetzung für einen geringen Verschleiß der Verriegelungselemente sowie der beiden Halteelemente darstellt. Die gleichmäßige Verteilung der Verriegelungselemente über den Umfang führt ferner dazu, dass sich die Kräfte zum Verriegeln dieser Verriegelungselemente, die radial gerichtet sind aufheben, so dass das innere Halteelement durch die Verriegelungskräfte nicht querkraftbelastet wird.

Zweckmäßigerweise ist zur radialen Bewegung des Verriegelungselements eine Verriegelungseinrichtung vorgesehen, welche selbsthemmend ausgebildet ist. Die Verriegelungseinrichtung ist im Inneren des inneren Halteelements vorzugsweise nahe dessen Mittelachse bzw. Rotationsachse angeordnet, um keine Unwucht zu erzeugen. Sie ist bewegbar ausgebildet und so mit dem Verriegelungselement gekoppelt, dass das Verriegelungselement über entsprechende Bewegungen der Verriegelungseinrichtung radial in eine Verriegelungsposition oder in eine entriegelte Position bewegt werden kann. Die selbsthemmende Ausgestaltung der Verriegelungseinrichtung verhindert ein selbsttätiges Lösen der Verriegelung, ausgelöst durch Kräfte, die auf das Verriegelungselement von außen, d.h. aus Richtung des äußeren Halteelements, radial gegen die Verriegelungsrichtung wirken.

Dazu ist die Verriegelungseinrichtung in einer vorteilhaften Ausführungsform der Erfindung in oder derart über einen Totpunkt bewegbar, dass im verriegelten Zustand von außen radial auf die Verriegelungselemente wirkende Kräfte in der Verriegelungseinrichtung eine Kraftkomponente erzeugen, welche in Verriegelungsrichtung der Verriegelungseinrichtung wirkt. Das Verriegelungselement ist so an der Verriegelungseinrichtung angekoppelt, dass jede Bewegung des Verriegelungselements immer mit einer Bewegung zumindest von Teilen der Verriegelungseinrichtung einhergeht. Unter dem Totpunkt bzw. der Totlage ist eine solche Position des Verriegelungselements und der Verriegelungseinrichtung zu verstehen, in der eine Kraftwirkung auf das Verriegelungselement keine Kraftkomponente auf die Verriegelungseinrichtung in einer deren möglicher Bewegungsrichtungen ausübt. Dementsprechend kann die Verriegelungseinrichtung und damit einhergehend das Verriegelungselement in diesem Totpunkt nicht durch eine am Verriegelungselement angreifende Kraft bewegt werden. Zweckmäßigerweise befindet sich das Verriegelungselement in der Verriegelungsposition mit der Verriegelungseinrichtung genau in diesem Totpunkt. Um diese Selbsthemmung in der Verriegelungsposition noch besser gewährleisten zu können, ist die Ankoppelung des Verriegelungselements an die Verriegelungseinrichtung so gestaltet, dass sie es ermöglicht, das die Verriegelungseinrichtung über den Totpunkt hinaus bewegt werden kann. Das Überschreiten des Totpunktes bei der Verriegelung führt dazu, dass es zu einer Umkehr der Wirkrichtung der auf die Verriegelungseinrichtung über das Verriegelungselement wirkenden Kraft kommt. Das heißt die Wirkrichtung ist nicht mehr in Löserichtung, sondern in Verriegelungsrichtung der Verriegelungsrichtung gerichtet. In dieser Verriegelungsrichtung kann eine weitere Bewegung der Verriegelungseinrichtung durch konstruktive Maßnahmen, z.B. einen Anschlag, verhindert werden. Eine die Verriegelung lösende Bewegung der Verriegelungseinrichtung ist erst nach Bewegen der Verriegelungseinrichtung zurück über den Totpunkt möglich.

Bevorzugt weist die Verriegelungseinrichtung eine Hebelmechanik auf, welche eine Bewegung und insbesondere eine Linearbewegung eines Betätigungselements in eine radiale Bewegung des Verriegelungselements umsetzt. Die Hebelmechanik kann sehr kompakt ausgestaltet werden und ist in der Lage, geringe Betätigungskräfte in große Verriegelungskräfte umzuwandeln. Da die Verriegelungseinrichtung vollständig innerhalb der beiden Halteelemente angeordnet ist, ist das Betätigungselement vorzugsweise so ausgebildet, dass die Verriegelungseinrichtung von außerhalb der Halteelemente betätigt werden kann. Hierzu ist das Betätigungselement in dem inneren Halteelement vorzugsweise im Wesentlichen parallel zur Mittelachse so geführt und ausgebildet, dass es von außerhalb des inneren Halteelements zugänglich ist. Eine Bewegung des Betätigungselements, beispielsweise eine Drehbewegung, insbesondere aber eine Linearbewegung in Richtung der Rotationsachse betätigt die Verriegelungseinrichtung und veranlasst eine radiale Bewegung der Verriegelungselemente relativ zur Rotationsachse. Das linear bewegbare Betätigungselement ist bevorzugt als Zug-/Druckstange ausgebildet und an der Hebelmechanik der Verriegelungseinrichtung angebunden.

Die Hebelmechanik weist zweckmäßigerweise zumindest einen Hebelarm auf, welcher mit einem ersten Anlenkpunkt an einem ersten Ende gelenkig an dem Betätigungselement und mit einem zweiten Anlenkpunkt an einem zweiten Ende gelenkig an dem Verriegelungselement angelenkt ist. Dabei ist das Betätigungselement zur Verriegelung zumindest soweit bewegbar, dass die Gerade durch den ersten und zweiten Anlenkpunkt des Hebelarms sich in Richtung einer Bewegungsachse des Verriegelungselements, d.h. vorzugsweise in radialer Richtung erstreckt. Der Hebelarm ermöglicht es, dass die Verriegelung durch ein linear bewegbares Betätigungselement, welches normal zur radialen Verriegelungsrichtung des Verriegelungselements bewegt wird, erzeugt werden kann. Bevorzugt ist das Verriegelungselement so geführt, dass es nur in radialer Richtung bewegt werden kann. Das gleiche gilt dann für den zweiten Anlenkpunkt, an dem das zweite Ende des Hebelarms an dem Verriegelungselement gelenkig angebunden ist. So ist dessen Position in Richtung der Mittelachse des inneren Halteelements nicht veränderbar. Im Gegensatz dazu ist der erste Anlenkpunkt, an dem das erste Ende des Hebelarms an dem Betätigungselement gelenkig angebunden ist, nur in Richtung normal zu der radialen Richtung, vorzugsweise in Richtung der Rotationsachse bewegbar und kann nicht in radialer Richtung hierzu bewegt werden. Dies führt bei Bewegung des Betätigungselements und der damit gekoppelten Bewegung des Verriegelungselements dazu, dass der Hebelarm bei dieser Anordnung eine Schwenkbewegung um seinen zweiten Anlenkpunkt durchführt, wobei sich ein von dem Hebelarm und der Bewegungsachse des Verriegelungselements gebildeter Winkel stetig verändert. Dabei weist der Winkel bei entriegeltem Verriegelungselement seinen größten Wert auf und beträgt bei einem verriegelten Verriegelungselement den Wert Null, wenn sich die Verriegelungseinrrichtung in dem oben beschriebenen Totpunkt befindet. In diesem Zustand erstreckt sich die Gerade durch den ersten und zweiten Anlenkpunkt in Richtung der Bewegungsachse des Verriegelungselements.

Vorteilhaft weist der Winkel zwischen der Geraden durch den ersten und zweiten Anlenkpunkt des Hebelarms und der Bewegungsachse des Verriegelungselements im verriegelten Zustand ein umgekehrtes Vorzeichen als im entriegelten Zustand auf. Dies ist der Fall, wenn, wie oben beschrieben, die Verriegelungseinrichtung über den Totpunkt hinaus bewegt wird. Der erste Anlenkpunkt des Hebelarms überquert dann einen durch den zweiten Anlenkpunkt verlaufenden Radius, d. h. die Bewegungsachse des Verriegelungselementes. Der Winkel zwischen der Geraden durch den ersten und zweiten Anlenkpunkt des Hebelarms und der Bewegungsachse des Verriegelungselements wechselt damit seine Richtung bzw. sein Vorzeichen. Damit einhergehend wechselt die Bewegungsrichtung des Verriegelungselementes, d.h., dass eine Bewegungsrichtung des Betätigungselementes, die zuvor zu einem Verriegeln des Verriegelungselements geführt hat, führt mit dem Vorzeichenwechsel des Winkels nun zu einer Bewegung des Verriegelungselementes in Löserichtung. Diese kann aber auf einfache Weise durch eine konstruktive Begrenzung der weiteren Bewegung der Verriegelungseinrichtung bzw. des Betätigungselementes in dieser Richtung verhindert werden.

Bevorzugt ist das Verriegelungselement federnd gelagert. Dabei ist ein Federelement so angeordnet, dass es radial zur Rotationsachse federt, d.h., dass sich der Federweg in Bewegungsrichtung des Verriegelungselements erstreckt. Bevorzugt ist das Federelement an der der Mittelachse des inneren Halteelements zugewandten Seite des Verriegelungselements angeordnet. Die Federung ist so ausgebildet, dass der Federweg einerseits eine Bewegung der Verriegelungseinrichtung bzw. des Hebelarms über den Totpunkt hinaus ermöglicht, andererseits aber verhindert, dass sich das Verriegelungselement aus einer verriegelnden Position lösen kann. Das Federelement weist eine dementsprechend große Federsteifigkeit auf. Beispielsweise kann das Federelement so angeordnet sein, dass die Federkraft das Verriegelungselement sowohl kurz vor als auch kurz nach dem Erreichen des Totpunktes sicher in eine verriegelte Stellung drückt, in der das Verriegelungselement nicht mehr weiter nach außen bewegt werden kann. Das an dem Verriegelungselement angebundene Ende des Hebelarms hat aber erst im Totpunkt seine maximal mögliche äußere Position erreicht. Dies wird durch die Federung möglich. Alternativ oder zusätzlich kann auch der korrespondierende Eingriffsabschnitt am äußeren Halteelement federnd gelagert werden.

Zweckmäßig ist ein Anschlag vorgesehen, welcher die Bewegung des Betätigungselements in Verriegelungsrichtung begrenzt. Dieser Anschlag ist so angeordnet, dass er nur eine sehr kleine Bewegung der Verriegelungseinrichtung über den beschriebenen Totpunkt hinaus zulässt. Der Anschlag ist so angeordnet, dass der Bewegungsweg der Verriegelungseinrichtung über den Totopunkt hinaus so begrenzt ist, dass sich das Verriegelungselement bei Erreichen des Anschlags im verriegelten Zustand befindet. Eine Kraft, die im verriegelten Zustand von au-ßen radial an dem Verriegelungselement angreift, wirkt über die Verriegelungseinrichtung nun direkt auf den Anschlag, welcher ein Lösen der Verriegelung verhindert.

Die Erfindung ist nachfolgend anhand von in den Zeichnungen dargestellten Ausführungsbeispielen erläutert. Es zeigen
- Fig. 1: eine Seitenansicht einer Reifenprüfmaschine,
- Fig. 2: eine geschnittene Detailansicht der Reifenaufnahme der Reifenprüfmaschine gemäß Fig. 1 im geöffneten Zustand,
- Fig. 3: eine geschnittene Detailansicht der Reifenaufnahme gemäß Fig. 2 während des Verriegelns von erstem und zweitem Halteelement und
- Fig. 4: eine geschnittene Detailansicht der Reifenaufnahme gemäß Fig. 2 mit verriegeltem ersten und zweiten Halteelement.

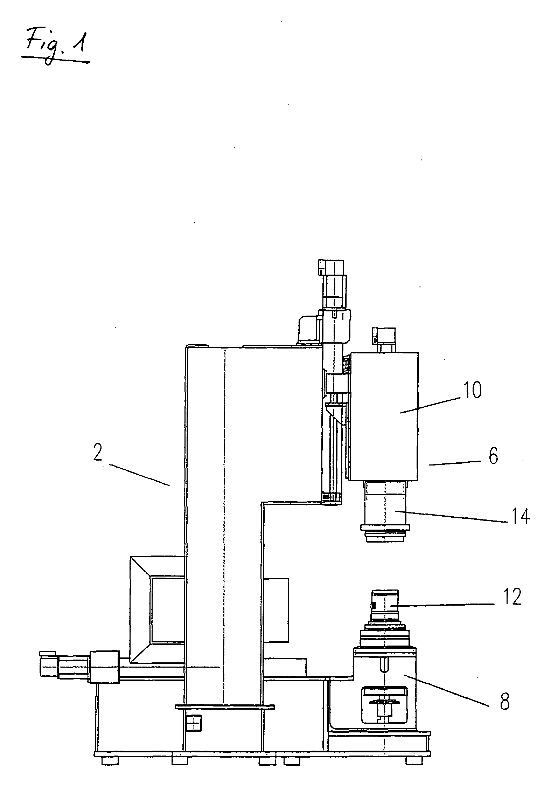

Fig. 1 zeigt eine Reifenprüfmaschine 2 zum Prüfen eines in der Fig. 1 nicht dargestellten Fahrzeugreifens 4. Die Reifenprüfmaschine 2 weist einen U-förmigen Rahmen auf, an dessen bodennahen Schenkelende ein erster ortsfester Support 8 und an dem davon beabstandeten zweiten Schenkelende ein zweiter Support 10 angeordnet sind, wobei der zweite Support 10 in vertikaler Richtung verfahrbar ausgebildet ist. Zusammen bilden die Supports 8 und 10 eine zweigeteilte Reifenaufnahme 6.

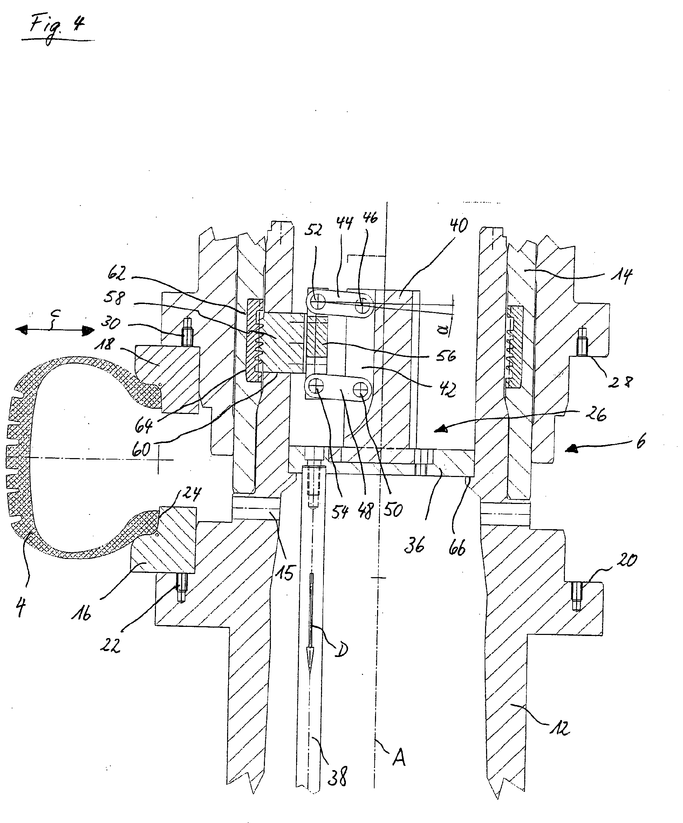

An dem ersten Support 8 der Reifenaufnahme 6 ist ein erstes Halteelement 12 und an dem zweiten Support 10 ist ein zweites Halteelement 14 angeordnet. An den beiden Halteelementen 12 und 14 sind jeweils eine in Fig. 1 nicht dargestellte Testfelgenhälfte 16, 18 vorgesehen, zwischen denen der Fahrzeugreifen 4 in der Prüfposition eingespannt wird, wobei die. Testfelgenhälften 16 und 18 gemeinsam die Reifenfelge bilden. Hierzu wird der zweite Support 10 der Reifenaufnahme 6 mit dem zweiten Halteelement 14 in Richtung des ersten Supports 8 und dem daran angeordneten ersten Halteelement 12 soweit bewegt, dass das erste, innere Halteelement 12 in das zweite, äußere Halteelement 14 eingreift. Hierzu ist das zweite Halteelement 14 hohl ausgebildet. Zur Prüfung des Fahrzeugreifens 4 wird im Inneren des fest eingespannten Fahrzeugreifens 4, wie er in der Fig. 4 dargestellt ist, ein dessen Betriebsbedingungen entsprechender Luftdruck aufgebaut. Die dafür erforderliche Druckluft wird über Druckluftanschlüsse 15 in den Fahrzeugreifen 4 geleitet

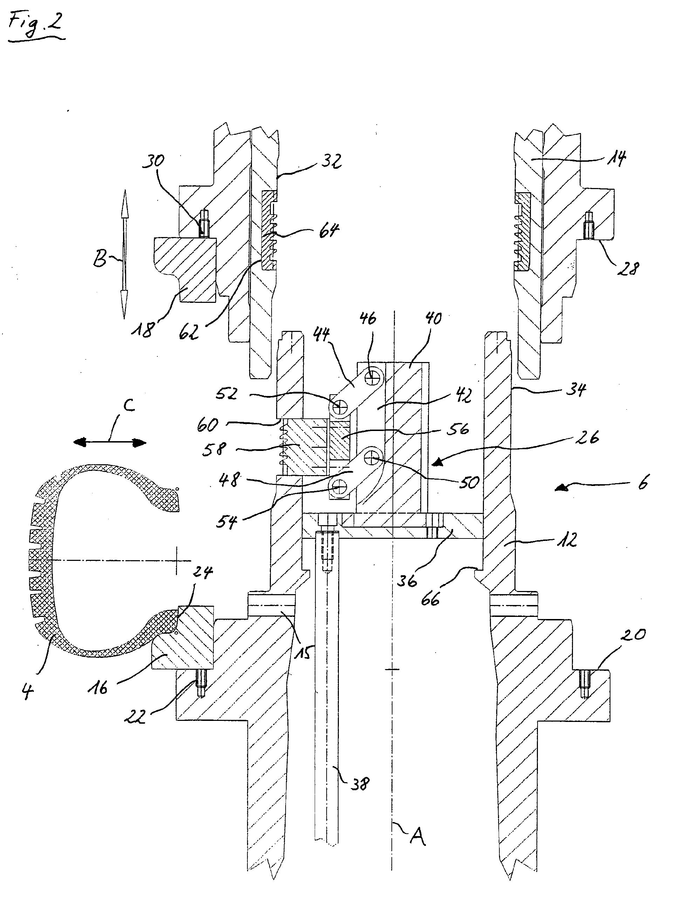

Die Einspannung des Fahrzeugreifens 4 und die Verriegelung des ersten Halteelements 12 mit dem zweiten Halteelement 14 wird detailliert aus den Fig. 2 bis 4 ersichtlich. Ein Fahrzeugreifen 4 liegt auf der an dem ersten Halteelement 12 angeordneten Testfelgenhälfte 16 auf. Die Testfelgenhälfte 16 ist ringförmig ausgebildet und liegt auf einem Absatz 20 des ersten Halteelements 12 auf, wo sie mittels Schrauben 22 befestigt ist. An der Außenkontur der Testfelgenhälfte 16 ist ein Absatz 24 eingearbeitet, der so dimensioniert und ausgebildet ist, dass ein Wulstende eines zu prüfenden Fahrzeugreifens 4 spielfrei an den von dem Absatz gebildeten Anlageflächen anliegt.

Das erste Halteelement 12 ist hohl und rotationssymmetrisch zu einer Rotations- bzw. Mittelachse A ausgebildet. Im Inneren des Halteelements 12 ist eine Verriegelungseinrichtung 26 angeordnet. Ebenfalls hohl und rotationssymmetrisch zu der Mittelachse A ist das zweite Halteelement 14. An diesem ist in ähnlicher Weise wie an dem ersten Halteelement 12 an einem Absatz 28 mittels Schrauben 30 eine Testfelgenhälfte 18 angebunden. Die Testfelgenhälfte 18 ist baugleich mit der Testfelgenhälfte 16, daher wird auf sie an dieser Stelle nicht weiter eingegangen.

Die Kontur der Innenwandung 32 des zweiten Halteelements 14 ist in dem Bereich, in den das erste Halteelement 12 eingreift, korrespondierend zu der Kontur der Außenwandung 34 des Endabschnitts des ersten Halteelements 12 geformt. Der Innendurchmesser des zweiten Halteelements 14 ist so dimensioniert, dass das zweite Halteelement 14, wenn der Support 10 in Richtung B, d. h. in Richtung der Rotations- bzw. Mittelachse A, hin zu dem ersten Halteelement 12 verfahren wird, das erste Halteelement 12 mit nur geringem Spiel umhüllt, bzw. das erste Halteelement 12 mit geringem Spiel in das zweite Halteelement 14 eingreift.

Die in dem ersten Halteelement 12 angeordnete Verriegelungseinrichtung 26 weist eine Grundplatte 36 auf, deren Durchmesser so groß ausgebildet ist, dass sie mit geringem Spiel im Inneren des offenen Endabschnitts des ersten Halteelements 12 in Richtung der Mittelachse A bewegbar geführt ist. An der von dem zweiten Halteelement 14 abgewandten Seite der Grundplatte 36 ist eine Betätigungsstange 38 starr angeordnet, während sich an der dem zweiten Halteelement 14 zugewandten Seite der Grundplatte 36, konzentrisch zu dieser, ein Zapfen 40 in Richtung des zweiten Halteelements 14 erstreckt. An diesem Zapfen 40 sind in einer umfangsseitigen Aussparung 42 jeweils an einem ersten Ende ein erster Hebelarm 44 an einem Anlenkpunkt 46 und ein zweiter Hebelarm 48 an einem Anlenkpunkt 50 so gelenkig angebunden, dass die Anlenkpunkte 46 und 50 in Richtung der Mittelachse A voneinander beabstandet sind. Ein Anlenkpunkt 52 an dem zweiten Ende des Hebelarms 44 sowie ein Anlenkpunkt 54 an dem zweiten Ende des Hebelarms 48 bilden die gelenkige Anbindung der Hebelarme 44 und 48 an einem Befestigungselement 56. Da die Hebel 44 und 48 gleich lang ausgebildet sind, bilden sie zusammen mit der durch die Anlenkpunkte 46 und 50 verlaufenden Geraden sowie dem Befestigungselement 56 ein Parallelogramm.

An dem Befestigungselement 56 ist über ein in den Figuren nicht dargestelltes radial zu der Mittelachse A wirkendes Federelement ein Verriegelungselement 58 angebunden. Das Verriegelungselement 58 ist in eine Durchbrechung 60 des ersten Halteelements 12 eingelassen, die eine zu der Außenkontur des Verriegelungselementes 58 komplementäre Form aufweist und in der das Verriegelungselement 58 in einer Bewegungsrichtung C, d.h. radial zur Mittelachse A, beweglich geführt ist. Die dem Befestigungselement 56 abgewandte Seite des Verriegelungselements 58 weist ein sägezahnförmiges Profil auf, wobei die Zähne dieses Profils eine ebene Zahnflanke, die sich in radialer und umfänglicher Richtung erstreckt und eine geneigte Zahnflanke, die im geöffneten Zustand der Testfelgenhälften 16, 18 dem freien Ende des ersten Halteelements 12 zugewandt ist, aufweisen.

Die Innenwandung 32 des zweiten Halteelements 14 weist eine Aussparung 62 auf, in die ein Verriegelungsabschnitt 64 vollständig eingelassen ist. Die der Mittelachse A zugewandte Seite des Verriegelungsabschnitts 64 ist in korrespondierender Weise zu dem in der Verriegelungseinrichtung 26 angeordneten Verriegelungselement 58 zahnförmig profiliert, wobei die dem offenen Ende des zweiten Halteelements 14 zugewandten Zahnflanken geneigt ausgebildet sind, während die diesem offenen Ende abgewandten Zahnflanken in radialer und umfänglicher Richtung ausgerichtet sind, so dass sie mit den korrespondierend geformten Zahnflanken des Verriegelungselementes zur Anlage kommen können.

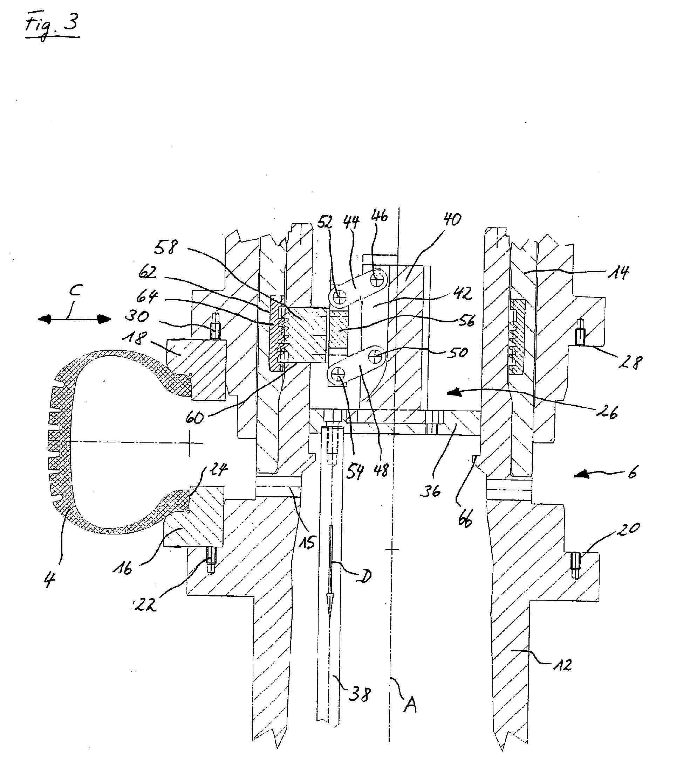

In der Fig. 3 ist die Reifenaufnahme während des Verriegelns von erstem Halteelement 12 mit dem zweiten Halteelement 14 dargestellt. Das zweite Halteelement 14 ist so weit in Richtung des ersten Halteelements 12 bewegt, dass das erste Halteelement 12 in das Innere des zweiten Halteelements 14 eingreift und die Wulstenden des Fahrzeugreifens 4 an den Testfelgenhälften 16 und 18 unter Druck anliegen.

Die beiden Halteelemente 12 und 14 sind so zueinander positioniert, das sich der Verriegelungsabschnitt 64 des zweiten Halteelements 14 und das durch die Durchbrechung 60 geführte Verriegelungselement 58 des ersten Halteelements 12 so gegenüberliegen, dass, wie dargestellt, durch ein Betätigen bzw. Bewegen der Betätigungsstange 38 in eine Bewegungsrichtung D, die sich in Richtung der Mittelachse A erstreckt, das Verriegelungselement 58 durch die Durchbrechung 60 radial nach außen bewegt wird und die Zähne des Zahnprofils des Verriegelungselements 58 in die Zahnlücken des Zahnprofils des an dem Halteelement 14 angeordneten Verriegelungsabschnitts 64 einrücken, so dass sowohl die geneigten als die sich radial erstreckenden Zahnflanken beider Zahnprofile zur Anlage kommen.

Ermöglicht wird dies durch Bewegen der Betätigungsstange 38, was eine Bewegung der Verriegelungseinrichtung 26 in Bewegungsrichtung D zur Folge hat. Diese Bewegung zwingt die Hebelarme 44 und 48, die in der gelösten Stellung relativ zu der Grundplatte 36 der Verriegelungseinrichtung 26 derart geneigt angeordnet sind, dass der Anlenkpunkt 46 weiter als der Anlenkpunkt 52 und der Anlenkpunkt 50 weiter als der Anlenkpunkt 54 von der Grundplatte 36 beabstandet sind, zu einer derartigen Schwenkbewegung im Uhrzeigersinn um die Anlenkpunkte 46 und 50, dass sich die Anlenkpunkte 52 und 54 weiter von der Grundplatte 36 entfernen. Dementsprechend vergrößert sich auch der Abstand des Befestigungselements 56 von der Grundplatte 36, welches gleichzeitig in Bewegungsrichtung C auf das zweite Halteelement 14 zu bewegt wird.

Die Fig. 4 zeigt die Reifenaufnahme 6 in einem Zustand, in dem der Verriegelungsvorgang vollständig abgeschlossen ist. Die Hebelarme 44 und 48 sind soweit im Uhrzeigersinn verschwenkt, dass bei dieser Schwenkbewegung ein Totpunkt bzw. eine Totlage überschritten wurde, wobei unter dem Totpunkt eine Position der Hebelarme 44 und 48 zu verstehen ist, in der die durch die Anlenkpunkte 46 und 52 verlaufende Gerade und die durch die Anlenkpunkte 50 und 54 verlaufende Gerade richtungsgleich mit der Bewegungsrichtung C des Verriegelungselements 58, d.h. radial ausgerichtet sind. In dieser Totlage können Kräfte, die gegen die Verriegelungsrichtung wirken, das Verriegelungselement 58 nicht in diese Richtung bewegen, da über die Hebearme 44 und 48 keine Kraft in Richtung A auf den Zapfen 40 wirkt, d.h., die Verriegelung kann durch Druck auf die Verriegelungselemente nicht gelöst werden. Eine federnde Ankopplung des Verriegelungselements 58 an dem Befestigungselement 56 über das nicht dargestellte Federelement unterstützt die Schwenkbewegung der Hebelarme 44 und 48 über den Totpunkt hinaus. Schon kurz vor Erreichen der Totopunktlage befindet sich das Verriegelungselement 58 mit dem Verriegelungsabschnitt 64 des zweiten Halteelements 14 in vollem Eingriff. In diesem verriegelten Zustand wird das Verriegelungselement 58 durch die Federkraft des Federelements radial nach außen gedrückt. Das Verriegelungselement 58 kann in Bewegungsrichtung C nicht mehr weiter radial nach außen bewegt werden. Die Bewegung in diese Richtung ist für die Anlenkpunkte 52 und 54 der Hebelarme 44 und 48 bis zum Erreichen des Totpunktes aber erforderlich und wird durch ein radiales Einrücken des zwischen dem Verriegelungselement 58 und dem Befestigungselement 56 angeordneten Federelements ermöglicht.

Werden die Hebelarme 44 und 48, wie in der Fig. 4 dargestellt, über die Totlage hinaus verschwenkt, hat dies eine Bewegungsumkehr des Befestigungselements 56 zur Folge. Zunächst verhindert die Federkraft des Federelements, indem sie das Verriegelungselement durch eine Federentspannung weiter in die verriegelte Stellung drückt, das Lösen der Verriegelung. Ein weiteres Verschwenken der Hebelarme 44 und 48 würde dann aber bewirken, dass das Verriegelungselement 58 von dem Verriegelungsabschnitt 64 weg bewegt würde. Aus diesem Grund wird der Bewegungsweg der Verriegelungseinrichtung 26 und damit einhergehend der mögliche Verschwenkwinkel der Hebelarme 44 und 48 so begrenzt, dass der Winkel α, welcher durch die Verriegelungsrichtung und die durch die Anlenkpunkte 46 und 52 verlaufende Gerade gebildet wird, einen bestimmten Wert nicht überschreitet, bei dem das Verriegelungselement 58 unterstützt von dem Federelement noch so in den Verriegelungsabschnitt 64 eingreift, dass das erste Halteelement 12 mit dem zweiten Halteelement 14 sicher verriegelt ist. Hierzu wird der Bewegungsweg der Verriegelungseinrichtung 26 in Verriegelungsrichtung entlang der Mittelachse A und damit einhergehend der Schwenkwinkel der Hebelarme 44 und 48 durch den Anschlag 66 begrenzt. Aufgrund des Anschlags 66 sind von außen auf das Verriegelungselement 58 wirkende Kräfte nicht in der Lage, die Verriegelung zu lösen, da diese Kräfte übertragen durch die Hebel 44 und 48, den Zapfen 40 sowie die Grundplatte 36 gegen den Anschlag 66 wirken, der eine weitere Bewegung, blockiert.

Aus Gründen der Übersichtlichkeit ist in den Fig. 2 - 4 nur ein Verriegelungselement 58 dargestellt, welches an dem Zapfen 40 der Verriegelungseinrichtung 26 angeordnet ist. An dem ersten inneren Halteelement 12 sind aber mehrere Verriegelungselemente 58, beispielsweise drei oder vier, vorgesehen, die die Form von Kreisringsegmenten aufweisen, die so groß ausgebildet sind, dass sich die Verriegelungselemente 58 nahezu über den gesamten Umfang des Halteelements 12 erstrecken. Entsprechend ist die Aussparung 62 an der Innenwandung 32 des zweiten Halteelements 14 nutförmig ausgebildet und erstreckt sich um den gesamten Umfang der Innenwandung 32. In der Aussparung 62 sind mehrere ringsegmentartige Verriegelungsabschnitte 64, vorzugsweise ebenfalls drei oder vier, zum Eingriff mit den Verriegelungselementen 58 angeordnet. Um alle Verriegelungselemente 58 zeitgleich und in gleichem Maße bewegen zu können, sind alle Verriegelungselemente 58 in gleicher Weise wie das im Teilschnitt dargestellte Verriegelungselement 58 an dem Zapfen 40 der Verriegelungseinrichtung 26 angebunden, d. h. umfangsseitig des Zapfens 40 sind mehrere Hebelsysteme, jeweils bestehend aus einem Hebel 44 und einem Hebel 48 angebunden, die sich in radialer Richtung nach außen zu den entsprechenden Verriegelungselementen 58 erstrecken, an denen sie jeweils über ein Befestigungselement 56 angebunden sind.

### Bezugszeichenliste

- 2: Reifenprüfmaschine
- 4: Fahrzeugreifen
- 6: Reifenaufnahme
- 8: Support
- 10: Support
- 12: Halteelement
- 14: Halteelement
- 15: Druckluftanschluss
- 16: Testfelgenhälfte
- 18: Testfelgenhälfte
- 20: Absatz
- 22: Schraube
- 24: Absatz
- 26: Verriegelungseinrichtung
- 28: Absatz
- 30: Schraube
- 32: Innenwandung
- 34: Außenwandung
- 36: Grundplatte
- 38: Betätigungsstange
- 40: Zapfen
- 42: Aussparung
- 44: Hebelarm
- 46: Anlenkpunkt
- 48: Hebelarm
- 50: Anlenkpunkt
- 52: Anlenkpunkt
- 54: Anlenkpunkt
- 56: Befestigungselement
- 58: Verriegelungselement
- 60: Durchbrechung
- 62: Aussparung
- 64: Verriegelungsabschnitt
- 66: Anschlag
- 68: Nut

- A: Mittelachse
- B: Bewegungsrichtung
- C: Bewegungsrichtung
- D: Bewegungsrichtung
- a: Winkel

## Patentansprüche

1. Reifenprüfmaschine (2) mit zwei Testfelgenhälften (16, 18) zum Einspannen eines Fahrzeugreifens (4), bei welcher die erste Testfelgenhälfte (16) an einem inneren Halteelement (12) und die zweite Testfelgenhälfte (18) an einem äußeren Halteelement (14) angebracht sind, das innere Halteelement (12) in das Innere des äußeren Halteelements (14) einsetzbar ist und zumindest ein gezahntes Verriegelungselement (58) vorgesehen ist, welches an dem inneren Halteelement (12) radial nach außen bewegbar und mit dem äußeren Halteelement (14) in Eingriff bringbar angeordnet ist.

2. Reifenprüfmaschine (2) nach Anspruch 1, **dadurch gekennzeichnet, dass** das äußere Halteelement (14) zumindest einen mit dem Verriegelungselement (58) korrespondierenden Eingriffsabschnitt (64) mit einer Verzahnung aufweist.

3. Reifenprüfmaschine (2) nach einem der vorangehenden Ansprüche, **dadurch gekennzeichnet, dass** das Verriegelungselement (58) ein Zahnprofil mit zumindest einer geneigten Flanke aufweist.

4. Reifenprüfmaschine (2) nach einem der vorangehenden Ansprüche, **dadurch gekennzeichnet, dass** zumindest eine der Testfelgenhälfte (16) des inneren Halteelements (12) zugewandte Flanke des Verriegelungselements (58) normal zur Mittelachse (A) der Halteelemente (12, 14) und Testfelgenhälften (16, 18) ausgerichtet ist.

5. Reifenprüfmaschine (2) nach einem der vorangehenden Ansprüche, **dadurch gekennzeichnet, dass** das Verriegelungselement (58) als Kreisringsegment ausgebildet ist.

6. Reifenprüfmaschine (2) nach einem der vorangehenden Ansprüche, **dadurch gekennzeichnet, dass** mehrere Verriegelungselemente (58) vorgesehen sind, welche vorzugsweise gleichmäßig über den Umfang des inneren Halteelements (12) verteilt angeordnet sind und sich vorzugsweise im Wesentlichen um den gesamten Umfang des inneren Halteelements (12) erstrecken.

7. Reifenprüfmaschine (2) nach einem der vorangehenden Ansprüche, **dadurch gekennzeichnet, dass** eine Verriegelungseinrichtung (26) zur radialen Bewegung des Verriegelungselements (58) vorgesehen ist, wobei die Verriegelungseinrichtung (26) selbsthemmend ausgebildet ist.

8. Reifenprüfmaschine (2) nach Anspruch 6, **dadurch gekennzeichnet, dass** die Verriegelungseinrichtung (26) in einen Totpunkt oder derart über einen Totpunkt bewegbar ist, dass im verriegelten Zustand von außen radial auf die Verriegelungselemente (58) wirkende Kräfte in der Verriegelungseinrichtung eine Kraftkomponente erzeugen, welche in Verriegelungsrichtung der Verriegelungseinrichtung (26) wirkt.

9. Reifenprüfmaschine (2) nach Anspruch 6, **dadurch gekennzeichnet, dass** die Verriegelungseinrichtung (26) eine Hebelmechanik (40, 44, 48, 56) aufweist, welche eine Bewegung und insbesondere eine Linearbewegung eines Betätigungselements (38) in eine radiale Bewegung des Verriegelungselements (58) umsetzt.

10. Reifenprüfmaschine (2) nach Anspruch 8, **dadurch gekennzeichnet, dass** die Hebelmechanik (40, 44, 48, 56) zumindest einen Hebelarm (44, 48) aufweist, welcher mit einem ersten Anlenkpunkt (46, 50) an einem ersten Ende gelenkig an dem Betätigungselement (38) und mit einem zweiten Anlenkpunkt (52, 54) an einem zweiten Ende gelenkig an dem Verriegelungselement (58) angelenkt ist, wobei das Betätigungselement (38) zur Verriegelung zumindest soweit bewegbar ist, dass die Gerade durch den ersten und zweiten Anlenkpunkt (46, 50, 52, 54) sich in Richtung einer Bewegungsachse ( C )des Verriegelungselements (58) erstreckt.

11. Reifenprüfmaschine (2) nach Anspruch 9, **dadurch gekennzeichnet, dass** der Winkel (α) zwischen der Geraden und der Bewegungsachse (C)des Verriegelungselements (58) im verriegelten Zustand ein umgekehrtes Vorzeichen als im entriegelten Zustand aufweist.

12. Reifenprüfmaschine (2) nach einem der vorangehenden Ansprüche, **dadurch gekennzeichnet, dass** das Verriegelungselement (58) federnd gelagert ist.

13. Reifenprüfmaschine (2) nach einem der vorangehenden Ansprüche, **dadurch gekennzeichnet, dass** ein Anschlag (66) vorgesehen ist, welcher die Bewegung des Betätigungselements (38) in Verriegelungsrichtung begrenzt.
